# EUROPEAN PATENT APPLICATION

(11) **EP 1 195 600 A2**
(43) Date of publication of application: **10.04.2002**
(21) Application number: 01308030.4
(22) Date of filing: 20.09.2001
(51) Int. Cl.: G01N 27/20

(54) **Pallet testing**

(30) Priority: 21.09.2000 GB 0023176
(71) Applicant: Phasor Limited, Wearfield, Sunderland SR5 2TA (GB)
(72) Inventor: Hage, Peter Michael, Sunderland SR6 7SG (GB); Wonders, Andrea Hay, Whitley Bay NE 26 4JQ (GB)
(74) Representative: Vinsome, Rex Martin

(57) **Abstract**

A pallet, a method of testing a pallet and apparatus for performing that test are described. A pallet having base boards, blocks, stringers and top boards also has electrically conducting elements attached to or between the above parts. The elements have a number of points of weakness and are designed to break in the event of damage occurring to the pallet. To test whether the pallet has been damaged a measurable electrical characteristic, such as resistance, is measured. In the event that the pallet has been damaged the electrical characteristic will alter indicating damage.

## Description

The present invention relates to pallets and the testing thereof, and particularly, but not exclusively, to a method and apparatus for detecting damage in pallets.

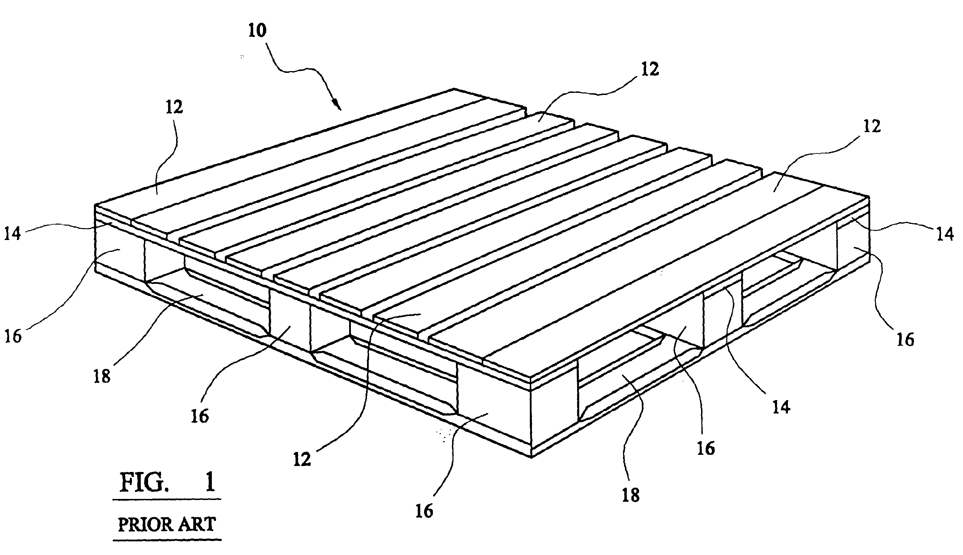

In many industries it is common to stack goods on a pallet as part of the manufacturing process or for delivery. Figure 1 shows an example of a typical pallet 10, which comprises top boards 12 supported on stringers 14. The stringers in turn are supported on blocks 16 which are attached to base boards 18.

Such pallets are generally re-used on a regular basis. In order that the pallets can be re-used safely, it is important to check that damage has not occurred to the pallet during a previous use. Damaged pallets can cause the goods stacked thereon to become unstable and if used on conveyors on production lines the goods and pallet can become jammed as the goods may be stacked unevenly on the pallet and tend to lean.

There are four main forms of damage which occur to pallets. Firstly the elongate boards, whether top boards, stringers or base boards may split at least partially along their length, which weakens the strength of the board. Secondly these boards may become broken or fractured typically as the result of an impact, and thirdly the blocks may be caused to shear either by rotation or by impact causing them to move relative to the stringers and base boards to which they are attached. Finally the blocks themselves may split.

The simplest form of testing of a pallet is by visual inspection. Where considerable damage of the type described above has occurred this can be easily seen. However, much of this damage may not be sufficient to present a visual indication but may affect the structural integrity of the pallet to an extent that it becomes dangerous to use. For example, a break in a top board will become visually almost undetectable if the board is straightened and will not become apparent again until a load is placed on it.

A number of machines have been devised which can assist with the testing of a pallet, however, such machinery is often expensive and is generally only used by companies running pallet pools (a system of leasing pallets) in order to check that pallets are sound before they are leased to another customer.

There are two main types of apparatus which are used to test the pallets. Firstly, pallets may be checked by an automatic pallet checking device such as that described in European Patent Application No 97500131. The apparatus described in this application uses a digitised image of a pallet in order to locate damage. However, as mentioned above, it is possible to make certain forms of damage look as though they have not occurred and as a result such a machine may not detect such damage.

UK Patent Application No 8025518 describes an alternative testing apparatus, which applies a load to the various structural members of the pallet and determines whether these members are able to withstand a load placed upon them within the required tolerances. This form of testing will detect damage in the above described example of a broken board which is straightened to its original position. However, as a result of the natural fluctuations in the strength of the wood used to form a pallet, the testing tolerances of the machine can result in false readings. Furthermore, each time a load is placed upon the pallet it reduces the life expectancy of the pallet.

Because both of these machines are expensive, they are only used by those with a special interest in pallets such as companies running pallet pools.

Preferred embodiments of the present invention seek to overcome the above described disadvantages of the prior art.

According to an aspect of the present invention, there is provided a pallet comprising:-
a plurality of load bearing members;
at least one electrically conducting element attached in use to a respective member and/or between at least two members, wherein the or each said electrically conducting element is adapted to change its at least one measurable electrical characteristic in response to structural damage of the pallet in a region adjacent said element.

By attaching an electrically conducting element to or between the various load bearing members of a pallet, it is possible to tell whether the element remains continuous, and therefore unbroken, by measuring changes in an electrical characteristic such as resistance. For example changes from negligible resistance for a single intact element to infinite for a broken element. In doing this, it is possible to tell whether damage has occurred. Because the element is attached with the member, it is able to move with the member under conditions of normal straining and will only break when damage occurs to the board. This provides the advantage that only damage which affects the strength of the board is detected. Furthermore by extending the element along more than one member of the pallet, the advantage is provided that a number of members can be tested at one time by measuring resistance between one end of the element and the other.

In a preferred embodiment, said electrical characteristic is impedance.

In a preferred embodiment, said electrical characteristic is resistance.

In a preferred embodiment, said electrical characteristic is capacitance.

In a preferred embodiment, said electrical characteristic is inductance.

In a preferred embodiment, at least one said element comprises an elongate strip having notches therein to provide points of weakness in the element.

By providing the element with points of weakness provides the advantage that the element can be formed so that it is more robust in some locations where for instance damage to the element, rather than any of the members, is more likely to occur.

In a preferred embodiment said points of weakness are located at points on or between the members where damage is most likely to occur.

By providing points of weakness along the element, the advantage is provided that the element will be more likely to break in one of a number of known locations and therefore locating where the damage has occurred becomes easier.

In a preferred embodiment, at least one said element comprises an elongate electrically conducting portion and attachment means disposed substantially at a right angle to said conducting portion.

In a preferred embodiment, said attachment means comprises an elongate strip extending along said conducting portion.

In a preferred embodiment, said attachment means comprises a plurality of substantially V-shaped spikes extending from said conducting portion.

In a preferred embodiment, said attachment means comprises nails extending through said conducting portion.

By providing a number of attachment means extending from said elongate conducting means, the advantage is provided that attachment can occur at specific locations along the members of the pallet so that the points of weakness of the pallet can occur between two points where the conducting means is attached to the pallet member.

In a preferred embodiment, at least one said element is at least partially attached to the corresponding member by adhesive.

In another preferred embodiment, at least one said element is a wire.

In another preferred embodiment, at least one said element is at least partially embedded within the member to which it is attached.

By embedding the elements within the members of the pallet, the advantage is provided that the elements are protected from accidental damage resulting from direct contact between, for instance, the forks of a forklift truck, and the element.

In a preferred embodiment, said pallet further comprises at least one first and at least one second terminal portion, connected to at least one said element, between which the electrical characteristic is measured to determine whether said element is broken.

In a preferred embodiment, at least one pair of said first and second terminal portions is adapted to engage corresponding terminal portions on a pallet lifting device such that the pallet can be tested by the measurement of the a measurable electrical characteristic between said first and second terminal portions.

By providing test points on a pallet and on a pallet lifting device, such as a fork lift truck, it is possible to test each pallet as it is used. Furthermore, if a pallet has been damaged whilst being loaded, it can be unloaded and replaced before it, and the goods on it, are moved, stored or placed on a conveyor.

In a preferred embodiment, at least one said element further comprises at least one respective electrical component having a measurable electrical characteristic.

In another preferred embodiment, said electrical component is a resistor.

In another preferred embodiment, said electrical component is a capacitor.

In another preferred embodiment, said electrical component is an inductor.

In a preferred embodiment, a plurality of said elements are connected in parallel between said first and second terminal portions.

By providing a number of elements with electrical components, for example resistors, and connecting them in parallel between two test points, in the event that one element becomes broken it is possible to determine which element is broken by measuring the electrical characteristic, for example resistance, between the two terminal portions. Using resistors as an example of an electrical component, if each of the resistors has a different and known value of resistance, the resistor which is no longer part of the circuit can be determined by calculation. It is therefore possible to isolate which board or joint has been broken.

In a preferred embodiment, said pallet further comprises at least one processor and at least one transmitter device testing the or each element to determine whether the measurable electrical characteristic of an element has changed and transmit this information to a detector.

In a preferred embodiment, at least one said transmitter device is a dormant transmitter only testing and transmitting in response to a received signal.

According to another aspect of the present invention there is provided an apparatus for lifting a pallet and articles thereon, the apparatus comprising, at least two fingers adapted to engage a pallet, said fingers moved in at least a vertical direction by a lifting means, wherein said apparatus further comprises at least one first and at least one second terminal portions adapted to engage at least one first and at least one second terminal portions of a pallet substantially as described above.

According to a further aspect of the present invention there is provided a method of testing the structural integrity of a pallet, the method comprising:-
determining whether at least one measurable electrical characteristic of an electrically conducting element changes in response to structural damage of the pallet in the region adjacent said element, said element being attached to at least one member or between at least two members of a pallet comprising a plurality of load bearing members.

A preferred embodiment of the invention will now be described, by way of example only, and not in any limitative sense, with reference to the accompanying drawings in which:
Figure 1 is a perspective view of a pallet of the prior art;
Figure 2 is a partial perspective view of a sensor of a first embodiment of the present invention;
Figure 3 is a partial perspective view of a sensor of a second embodiment of the present invention;
Figure 4 is a partial perspective view of a sensor of a third embodiment of the present invention;
Figure 5 is a partial perspective view of a sensor of a fourth embodiment of the present invention;
Figure 6 is a partial perspective view of a sensor of a fifth embodiment of the present invention;
Figure 7 is an underneath plan view of the base boards and a circuit of a sixth embodiment of the present invention;
Figure 8 is a circuit diagram of the embodiment of Figure 7;
Figure 9 is a view from below if the embodiment of Figure 7 with the base boards removed;
Figure 10 is a side view of the pallet of Figure 7;
Figure 11 is a schematic view of a pallet and forklift truck embodying the present invention; and
Figure 12 is a schematic view of a pallet and pallet de-stacking apparatus embodying the present invention.

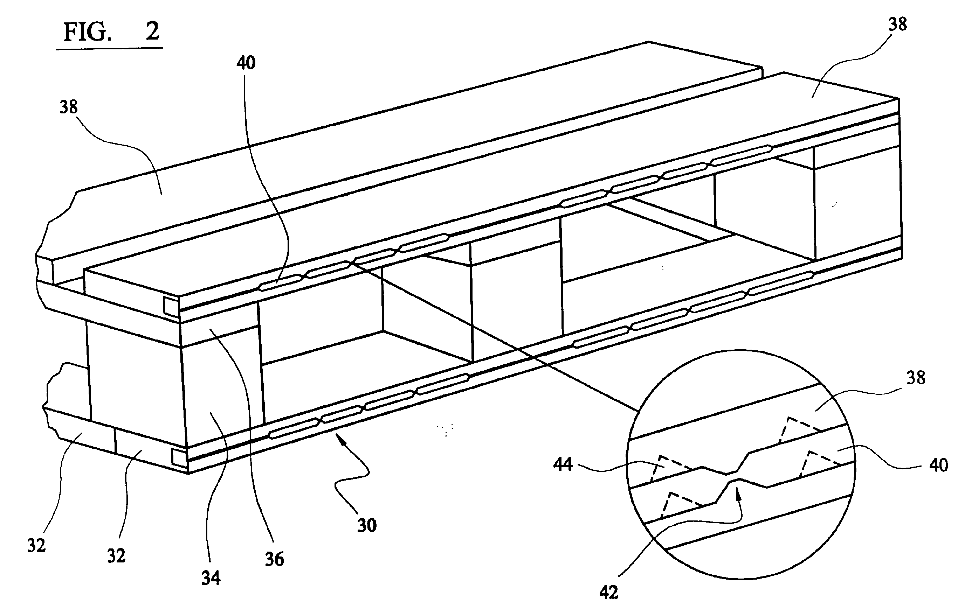

Referring to Figure 2, a pallet 30 comprises members 32 to 38. These members are base boards 32, blocks 34, stringers 36 and top boards 38. An electrically conducting element 40 is attached to top board 38. Electrically conducting element 40 has a number of points of weakness 42 adjacent to which are generally located attachment spikes 44.

In the event of an impact occurring on a top board 38, to which an electrically conducting member 40 is attached, which is sufficient to break the structure of the wood of the top board 38 to the point where it is unable to support the weight of the goods stacked on the pallet, then as well as breaking the structure of the wood of the top board 38, the point of weakness 42 in conducting member 40 will also break. Conducting member 40 will break at point 42, rather than moving relative to board 38, by virtue of attachment spikes 44 retaining the conducting element 40 in position relative to board 38 immediately adjacent point of weakness 42. Once electrically conducting member 40 is broken, an electrical current will not run along the member 40 and as a result a test for the electrical integrity of member 40 provides a test for damage of board 38. Alternatively this can be measured as an infinite resistance. This type of sensor is referred to as a fracture sensor.

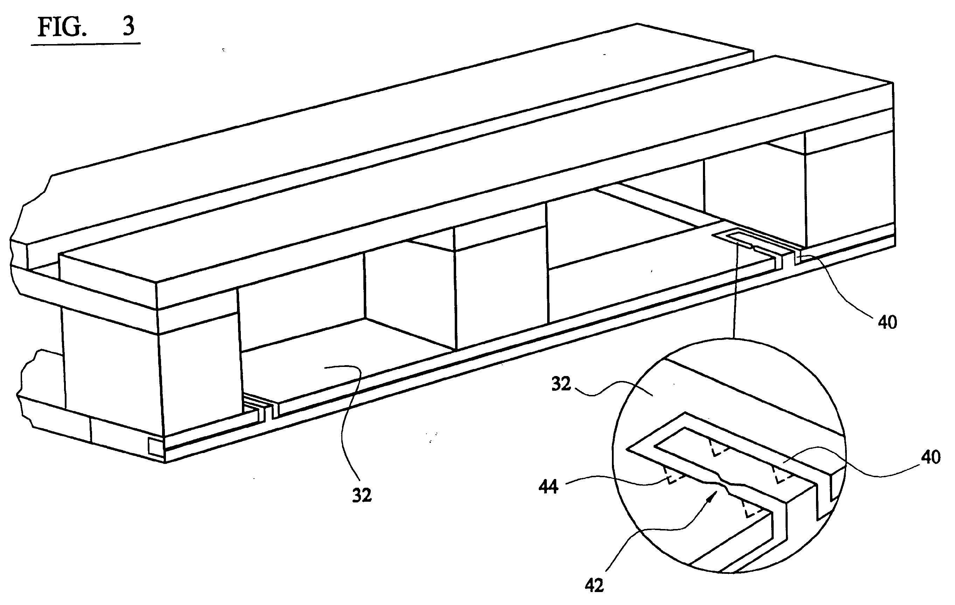

Referring to Figure 3, conducting member 40 is at least partially spread across base board 32.

In the event that board 32 were to split, at least partially along its length, point of weakness 42 in conducting member 40 would break thereby preventing an electrical current from flowing along electrically conducting member 40. This type of sensor is known as a split board sensor and is suitable for location on any of the elongate boards, the base boards 32, stringers 36 and top boards 38. It is also suitable to be located at any point along an elongate board, however, damage to elongate boards most commonly occurs at the ends of the boards where the sensors are shown in Figure 3. The thickness of member 40 at point of weakness 42, and therefore the force required to break it may be different for different types of sensor. For instance a split board sensor may have a thinner point of weakness than a fracture sensor.

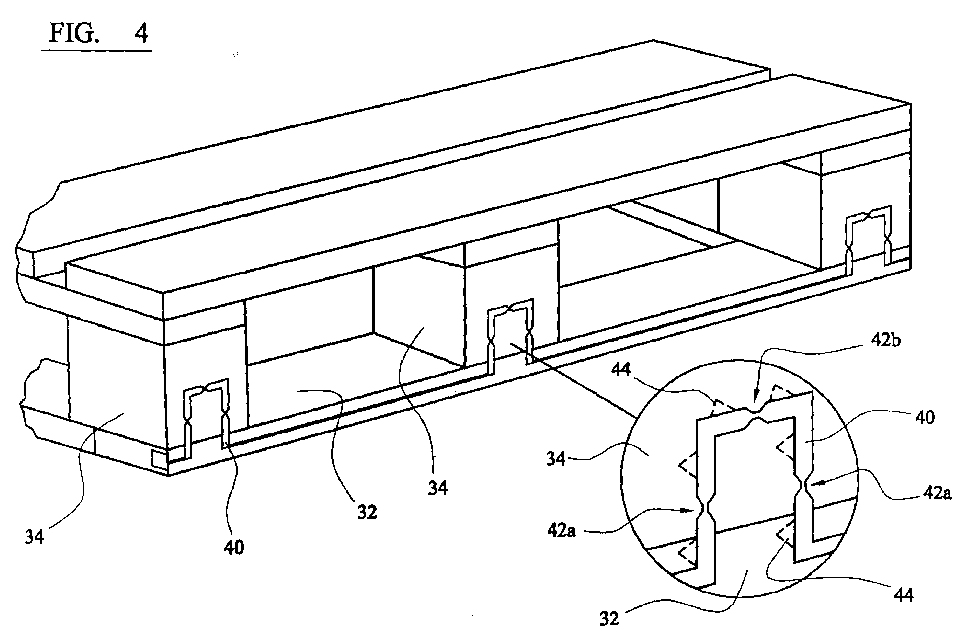

Referring to Figure 4, the electrically conducting elements 40 are shown extending between base board 32 and blocks 34. There are two types of points of weakness 42a and 42b which can be used to detect different damage to pallet 30.

In the event that a block 34 is caused to rotate around a vertical axis, is shifted laterally in a horizontal plane or it becomes split or broken in the horizontal plane, points of weakness 42a will break. In the event that block 34 splits in a vertical plane, point of weakness 42b will be caused to break. In the event of a break in either points of weakness 42a and 42b, an electrical current will again be unable to flow through conducting element 40. Points of weakness 42a will also be caused to fracture in the event of base board 32 becoming detached or moving away from block 34. This type of sensor is known as a split block and broken joint sensor.

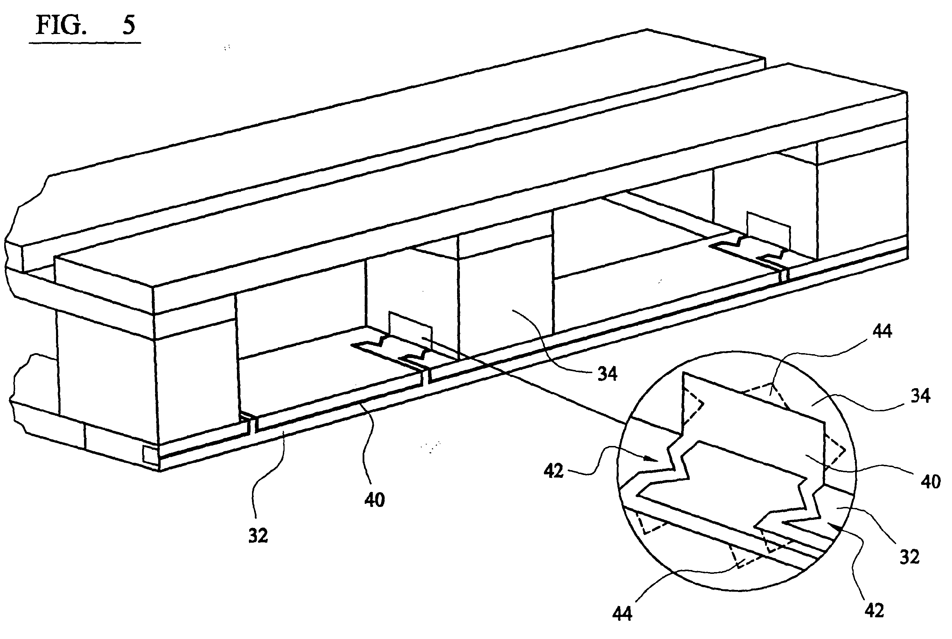

Referring to Figure 5, electrically conducting element 40 again extends between base board 32 and block 34 and has points of weakness 42 adjacent board 32. In the event of rotation of block 34 around a vertical axis, conducting member 40 is caused to break at points of weakness 42. This type of sensor is known as a twisted block shear sensor.

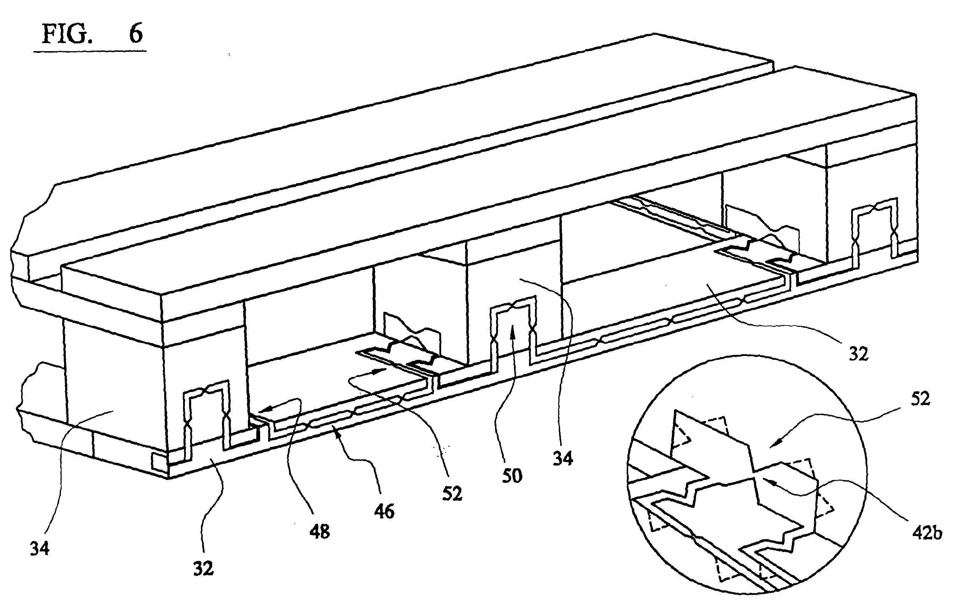

Figure 6 shows a combination of the sensors of Figures 2 to 5 on a single pallet. Base board 32 has fracture sensor 46 (of the type shown in Figure 2). This is combined with split board sensor 48 (of the type shown in Figure 3). Between board 32 and block 34 are split block and broken joint sensors 50 (of the type shown in Figure 4). Also between board 32 and block 34 is shown twisted block shear sensor 52 (of the type shown in Figure 5). This sensor also contains point of weakness 42b which acts as a split block sensor.

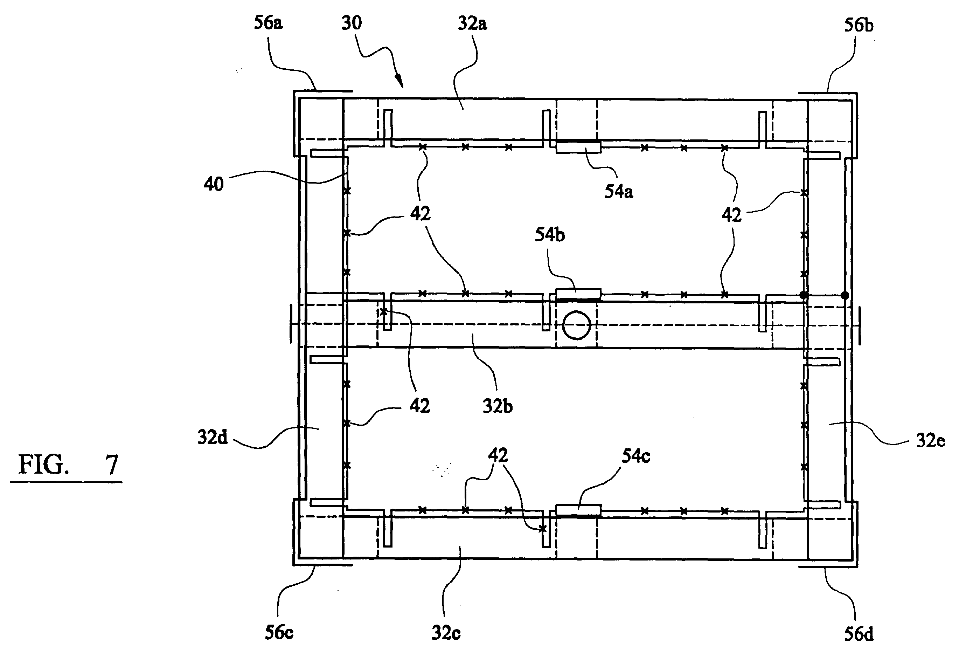

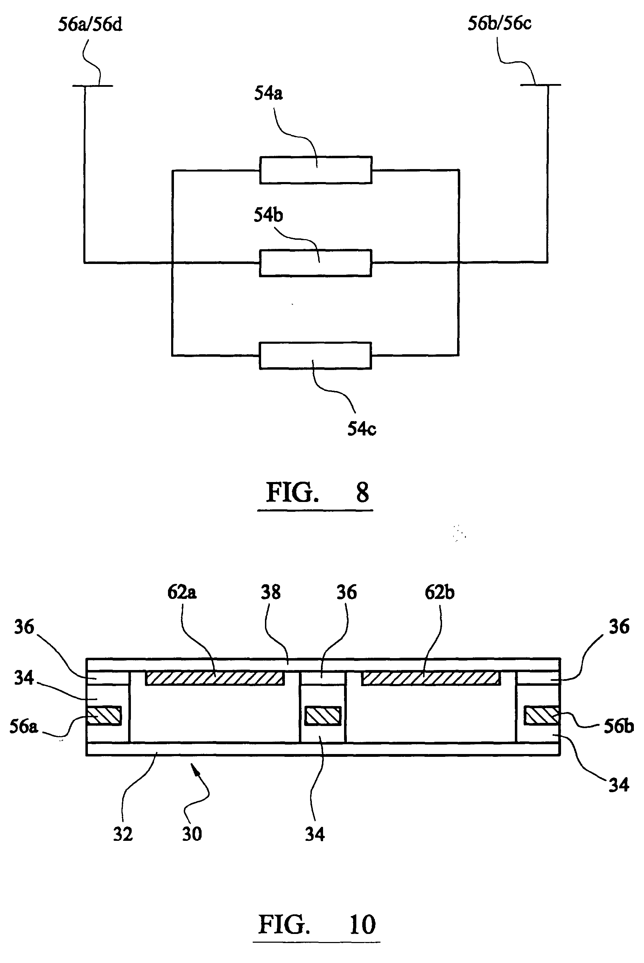

Referring to Figure 7, pallet 30 is viewed from underneath, showing base boards 32a, 32b, 32c, 32d and 32e. Electrically conducting element 40 is schematically represented adjacent said boards and forms a circuit. Within that circuit are three resistors 54a, 54b and 54c and are arranged in parallel as shown in the circuit diagram of Figure 8. Resistors 54a, 54b and 54c could alternatively be other electrical components having a measurable electrical characteristics, for examples capacitors or inductors. Also formed as part of the circuit constructed of electrical conducting member 40 are test points 56a, 56b, 56c and 56d. If the resistance is measured between test points 56a and 56b or 56c and 56d, a resistance value dependent upon the value of resistors 54a, 54b and 54c can be read. The value of this resistance will be the reciprocal of the sum of the reciprocal values of resistors 54a, 54b and 54c.

In the event of a break in electrical conducting element 40, i.e. at one of the points of weakness 42, the current used by the ohmmeter to measure the resistance, will only be able to flow through two of the resistors 54a, 54b and 54c. If each of resistors 54a, 54b and 54c is of a different resistance, it is possible to calculate which of the resistors no longer has a current flowing through it and thereby isolate which base board or boards 32 might be broken.

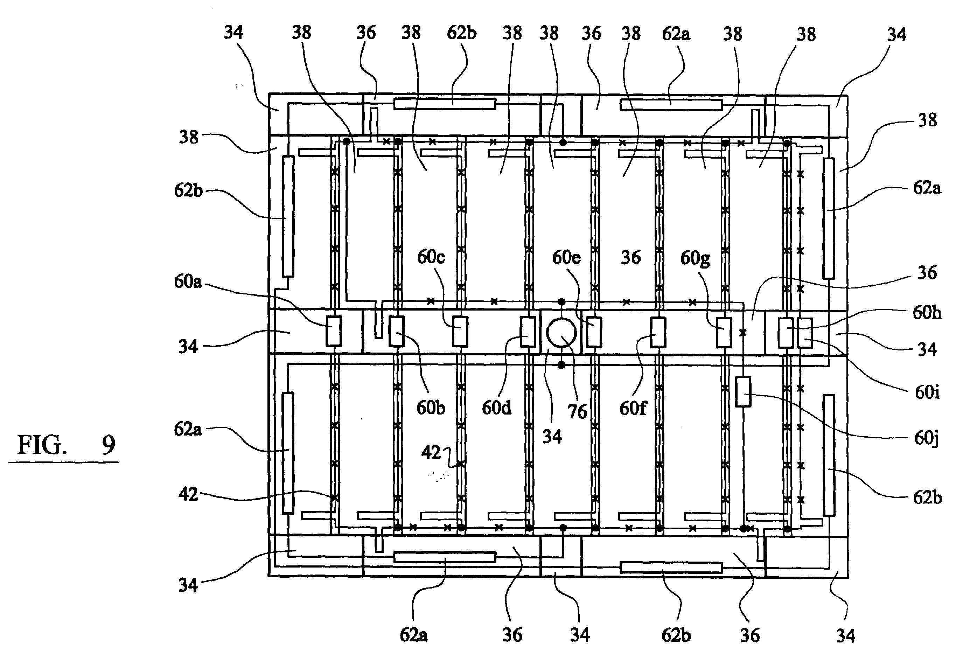

Figure 9 shows pallet 30 again viewed from underneath with the base boards 32 removed such that blocks 34, stringers 36 and top boards 38 are visible. Electrical conducting element 40 is again shown schematically extending around the above described boards. The circuit formed from conducting element 40 contains resistors 60a, 60b, 60c, 60d, 60e, 60f, 60g, 60h, 60i, 60j and also has test points 62a, 62b, 62c, 62d, 62e, 62f. The above described circuit works on the same principle as that described in relation to Figures 7 and 8.

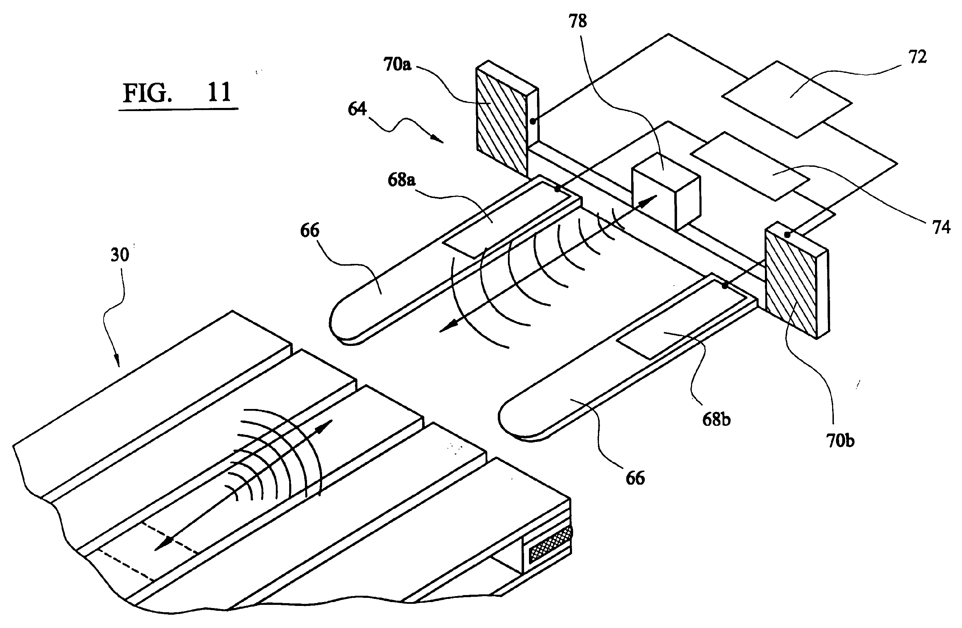

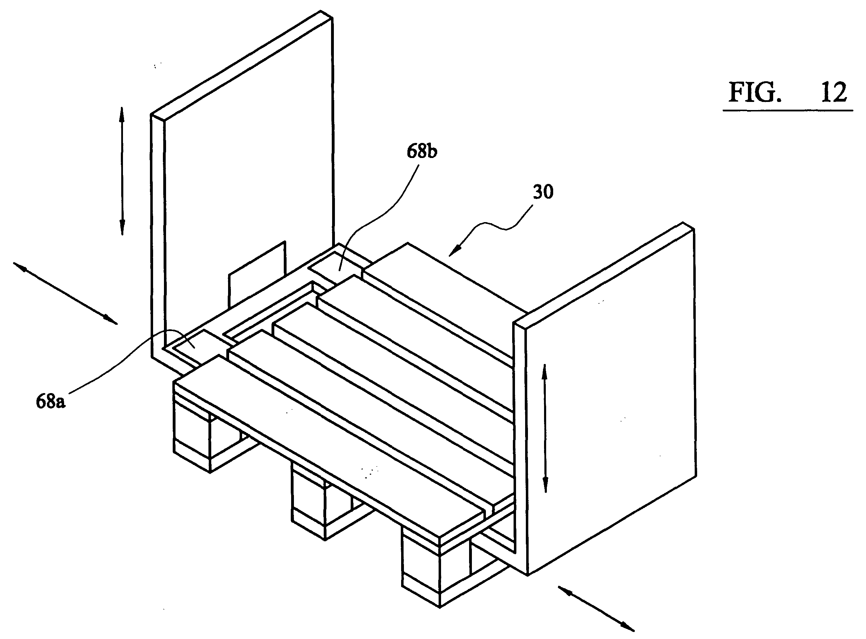

Figure 10 shows an end view of pallet 30 with test points 56a and 56b and 62a and 62b. The location of these test points allows a forklift truck such as that shown schematically in Figure 11 to test a pallet as it is lifted. Forklift truck 64 has forks 66 and test pads 68a and 68b thereon as well as test pads 70a and 70b adjacent forks 66. When forks 66 are inserted into pallet 30, test pads 70a and 70b come into contact with test pads 56a and 56b. Ohmmeter 72 tests the resistance between test pads 70a and 70b and can be used to calculate which, if any, members may be broken. Similarly when forks 66 are lifted to engage pallet 30, test pads 68a and 68b engage test pads 62a and 62b and circuitry 74 is able to test the resistance therebetween and determine which, if any, members may be broken.

Alternatively the circuit constructed from conducting element 40 can be connected to a self test microprocessor 76 to check the integrity of the circuit and provide a signal to a receiving processor 78 which can be located on forklift truck 64. The processor 76 is of a type which does not test the resistance of the circuit until it receives a signal from processor 78, thereby saving battery power.

Similar devices can be installed in the pallet de-stacking systems such as that shown in Figure 12, which are commonly used in pallet pools.

As an alternative to test pads located on the forks of a forklift a handheld tester could be used, including a standard electrical resistance meter.

It will be appreciated by persons skilled in the art that the above embodiment was described by way of example only, and not in any limitative sense, and that various alterations and modifications can be made without departure from the appended claims. For example the above embodiment is described for use on a standard British pallet, however, the invention is equally applicable to other pallets including a standard European pallet. Furthermore, it will be appreciated by persons skilled in the art that some or all of the features of the various embodiments described above may be combined in a single pallet arrangement.

## Claims

1. A pallet comprising:-
a plurality of load bearing members;
at least one electrically conducting element attached in use to a respective member and/or between at least two members, wherein the or each said electrically conducting element is adapted to change at least one measurable electrical characteristic in response to structural damage of the pallet in a region adjacent said element.

2. A pallet according to claim 1, said electrical characteristic is impedance.

3. A pallet according to claim 2, said impedance is any one of resistance, capacitance or inductance.

4. A pallet according to any one of the preceding claims, wherein at least one said element comprises an elongate strip having notches therein to provide points of weakness in the element.

5. A pallet according to claim 4, wherein said points of weakness are located at points on or between the members where damage is most likely to occur.

6. A pallet according to any one of the preceding claims, wherein at least one said element comprises an elongate electrically conducting portion and attachment means disposed substantially at a right angle to said conducting portion.

7. A pallet according to claim 6, wherein said attachment means comprises any one of the following:-
an elongate strip extending along said conducting portion;
a plurality of substantially V-shaped spikes extending from said conducting portion; or
nails extending through said conducting portion.

8. A pallet according to any one of the preceding claims, wherein at least one said element is at least partially attached to the corresponding member by adhesive.

9. A pallet according to any one of the preceding claims, wherein at least one said element is a wire.

10. A pallet according to any one of the preceding claims, wherein at least one said element is at least partially embedded in the member to which it is attached.

11. A pallet according to any one of the preceding claims, wherein at least one said element further comprises at least one respective electrical component having a measurable electrical characteristic.

12. A pallet according to claim 11 wherein said electrical component is any one of a resistor, a capacitor or an inductor.

13. A pallet according to any one of the preceding claims, further comprising at least one processor and at least one transmitter device testing the or each element to determine whether the resistance of an element has changed and transmit this information to a detector.

14. A pallet according to claim 13, wherein at least one said transmitter device is a dormant transmitter only testing and transmitting in response to a received signal.

15. A pallet according to any one of the preceding claims, further comprising at least one first and at least one second terminal portion, connected to at least one said element, between which a electrical characteristic is measured to determine whether said element is broken.

16. A pallet according to claim 15, wherein at least one pair of said first and second terminal portions is adapted to engage corresponding terminal portions on a pallet lifting device such that the pallet can be tested by the measurement of a measurable electrical characteristic between said first and second terminal portions.

17. A pallet according to claim 15 or 16, wherein a plurality of said elements are connected in parallel between said first and second terminal portions.

18. An apparatus for lifting a pallet and articles thereon, the apparatus comprising, at least two fingers adapted to engage a pallet, said fingers moved in at least a vertical direction by a lifting means, wherein said apparatus further comprises at least one first and at least one second terminal portions adapted to engage at least one first and at least one second terminal portions of a pallet according to any one of claims 15 to 17.

19. A method of testing the structural integrity of a pallet, the method comprising:-
determining whether at least one measurable electrical characteristic of an electrically conducting element changes in response to structural damage of the pallet in the region adjacent said element, said element being attached to at least one member or between at least two members of a pallet comprising a plurality of load bearing members.
